Europäisches Patentamt

(19) European Patent Office                    (11) Publication number: **0 036 751**

Office européen des brevets                                                      **B1**

(12)                          EUROPEAN PATENT SPECIFICATION

(45) Date of publication of patent specification: **12.09.84**          (51) Int. Cl.³: **G 01 S 7/30, G 01 S 7/36**

(21) Application number: **81301133.5**

(22) Date of filing: **18.03.81**

(54) **Improvements in or relating to signal rank detectors.**

(30) Priority: **24.03.80 GB 8009076**

(43) Date of publication of application:
**30.09.81 Bulletin 81/39**

(45) Publication of the grant of the patent:
**12.09.84 Bulletin 84/37**

(84) Designated Contracting States:
**CH DE FR IT LI NL SE**

(56) References cited:
**DE-A-2 402 050**
**DE-B-1 766 173**
**US-A-3 778 822**
**US-A-3 995 270**

**M.I. SKOLNIK "Introduction to radar systems",**
**second edition, 1980, 1962 MC GRAW-HILL**
**KOGAKUSHA Ltd., Tokyo, pages 392-398**

(73) Proprietor: **THE MARCONI COMPANY LIMITED**
**Marconi House New Street**
**Chelmsford Essex CM1 1PL (GB)**

(72) Inventor: **Jelffs, Michael William**
**10, Mallard Avenue**
**Groby Leicester LE6 0GR (GB)**
Inventor: **Neale, David**
**316, Lawford Road**
**Rugby Warwickshire CV21 2JQ (GB)**

(74) Representative: **Hoste, Colin Francis**
**Marconi House New Street**
**Chelmsford Essex CM1 1PL (GB)**

Courier Press, Leamington Spa, England.

## Description

This invention relates to signal rank detectors and is particularly applicable to signal processing systems of the kind which are used in surveillance radars. It is possible to monitor the amplitude of radar echoes received by a surveillance radar so as to automatically detect the presence of an echo corresponding to a potential target. It can be extremely difficult to reliably and consistently detect low amplitude target signals amongst randomly distributed noise signals. The generation of an excessive number of false alarms due to the presence of large noise signals can be very troublesome and it is becoming more common to design radar systems which operate at a constant false alarm rate (CFAR).

A constant false alarm rate system operates by monitoring the amplitude of a radar return signal as compared with signals received from immediately adjacent ranges and to indicate the presence of a target if the amplitude is significantly higher than most of the neighbouring signals. This can be achieved in practice by comparing the amplitude with the average amplitude of neighbouring signals, or alternatively by means of a rank detector. The rank detector monitors the relative amplitudes of individual signals and assumes that over a particular time scale corresponding to a particular range ambit, the radar return signal having the highest amplitude corresponds to a target. Such a system has disadvantages if more than one target signal is present within the range ambit, since the target signals of lesser amplitudes are ignored. Whilst in principle this difficulty could be overcome by assuming that, say, the largest three or four signals relate to targets, this would produce excessive degradation of the operation of the radar system when very few target signals are present, since in such a case large amplitude noise signals would be more likely to trigger a target detection.

The present invention seeks to provide a signal rank detector, which does not suffer from these disadvantages.

According to this invention, a signal rank detector includes a first stage which receives a sequence of amplitude samples and which is arranged to examine each received sample and to provide a rank signal if the examined signal has a rank which exceeds a first rank threshold value; a second stage which is coupled to said first stage so as to receive all of said rank signals, and which utilises a particular rank signal only if that rank signal is present for at least two consecutive pulse repetition intervals, said second stage providing an output rank signal only if that sample has a rank value which exceeds a second rank threshold value which is greater than said first rank threshold value.

Preferably the first stage is arranged to compare the amplitude of a selected sample with each of a number of preceding and following reference samples of the sequence of amplitude samples so as to produce a comparison signal for each reference sample if the selected sample is of greater amplitude than the reference sample with which it is compared.

Preferably again, the second stage receives all of said rank signals together with the corresponding comparison signals.

The invention is particularly applicable to surveillance radars which operate by transmitting radar signals in a pulsed manner. Frequently, the radar is arranged to scan in azimuth with radar pulses being transmitted very rapidly as compared with the azimuth angular scan rate. Because the radar beamwidth has a finite size, each target will receive a number of consecutive radar pulses as the radar beam scans across it. Consequently, each target produces a number of echoes, which are received by the radar receiver at the pulse repetition interval. If a target is present, the amplitude of signal samples obtained at contiguous intervals which are equal to the transmitted pulse repetition intervals of the radar will relate to echo signals from the same range and will consequently relate to the same target if one is present at that range and bearing.

Therefore, the rank signals derived by the first stage of the rank detector are utilised by the second stage only if that rank signal is present for two consecutive pulse repetition intervals. This removes the effect of random high amplitude noise spikes which might otherwise be mistaken for real targets. If a noise spike is of sufficiently high amplitude to produce a rank signal during one pulse repetition interval, it is statistically improbable that the amplitude sample corresponding to the same range in the next pulse repetition interval will also be large enough to produce a rank signal. It is desirable that the comparison signals obtained during a particular pulse repetition interval are utilised by the second stage in conjunction with rank signals derived from the preceding two pulse repetition intervals. Thus the final output rank signal is based on amplitude samples obtained during three consecutive pulse repetition intervals if the comparison signals fed to the second stage are obtained during the third (most recent) pulse repetition interval. This serves to minimise the effect of false alarm detections which stem from the presence of noise signals. Shipborne radars often receive a great deal of noise signals which represent what is termed sea clutter — these are relatively short range echoes which are returned by the wave motion of the surface of the sea. Echoes of this kind do not necessarily have a very short duration and may occasionally produce an output signal from the rank detector.

The invention is further described by way of example with reference to the accompanying drawing, in which

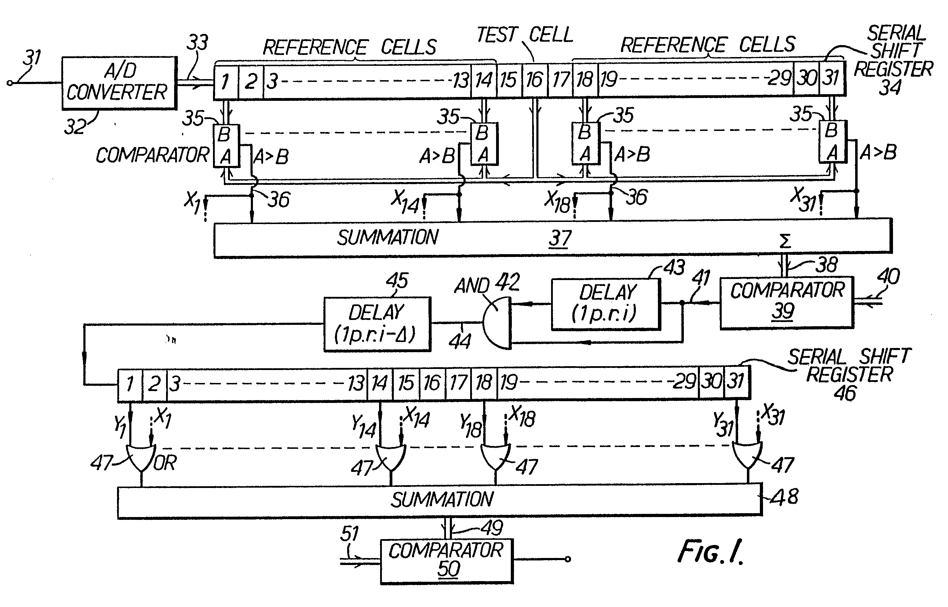

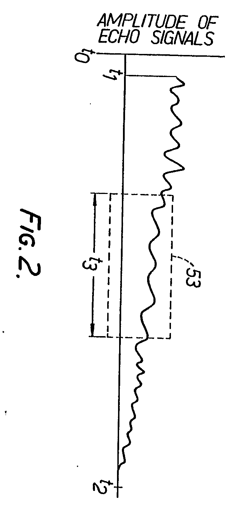

Figure 1 illustrates a signal rank detector in accordance with the present invention, and Figure 2 is an explanatory diagram.

Referring to the drawing, the signal rank detector consists of a terminal 31 to which a radar video signal is applied. The video signal at this point is an analogue signal of variable amplitude level. It is passed through an analogue-to-digital converter 32, which samples the analogue signal at a constant sampling rate and generates an eight bit digital code word in response to each sample. The digital code word consists of the set number of digital bits, which together represent the amplitude of that sample. These digital code words are passed in parallel over a data highway 33 to a serial shift register 34. The shift register 34 contains thirty-one stages or cells, each of which temporarily stores an eight bit code word, and each word is clocked progressively through the shift register under the action of a clock signal. The cells are numbered 1 to 31 and cell numbers 1 to 14 and 18 to 31 inclusive are termed reference cells, whereas the central cell number 16 is termed the test cell. There are thus twenty-eight reference cells and each of these is provided with a digital comparator 35 (of which only four are illustrated) which is arranged to compare the amplitude of the digital word stored in the corresponding reference cell with the amplitude of the digital word held in the test cell 16. If the amplitude of the test cell is greater than that of the respective reference cell, the comparator 35 produces a logic 1 level on line 36, whereas if the test cell is smaller a logic 0 level is produced. Each comparator 35 is connected via its respective line 36 to a summation device 37. The summation device 37 is digital in nature and produces on an output highway 38 a digital word which is representative of the number of logic 1 levels which are fed to the summation circuit 37 over the twenty-eight lines 36.

Highway 38 feeds a further comparator device 39, which acts to compare the amplitude of the signal fed to it over highway 38 with that of a low threshold signal applied to it over highway 40. Typically, the low threshold signal corresponds to an amplitude level of twenty-four logic 1 levels. If the value of the signal present on highway 38 is greater than or equal to the threshold level on highway 40, the comparator 39 produces an output logic 1 level on line 41.

Thus the circuit as so far described acts as a rank detector to produce an output logic 1 level on line 41 whenever the signal present in the test cell 16 is one of the four highest amplitude signals present in the whole of the shift register 34. Thus the rank detector can detect up to four target signals at any one time, but if no target signals are present in the shift register 34, the four highest noise signals are, of course, detected, thereby giving a rather high false alarm rate. The way in which this false alarm rate is reduced to an acceptable level is explained with reference to the remainder of the drawings.

Figure 2 is an explanatory diagram which illustrates the time scale of one pulse repetition period. It is assumed that a radar pulse is transmitted at time $t_0$, and that radar echoes are received from very close targets after a short interval $t_1$. At close range the amplitude of the echo signals can be relatively large, but many of these can be merely sea clutter for a shipborne radar. For longer time delays, which correspond to long range targets, the amplitude of echo signals fall off, and after a time $t_2$ the next radar pulse is transmitted. The period between times $t_0$ and $t_2$ is termed the pulse repetition period of the radar.

The echo signals are termed video signals and are fed sequentially to the analogue-to-digital converter 32 of Figure 1. The equivalent length of the shift register 34 is given by the time period $t_3$ and is indicated by the block 53. During each pulse repetition interval the block 53 may be regarded as moving from left to right along the time scale as it acquires echo signals corresponding to longer and longer ranges. Thus at any instant in time the register 34 contains echo signals corresponding to a "range gate" of duration $t_3$.

Referring again to Figure 1, the signals present on line 41 are passed directly to one input of an AND gate 42 and also via a delay line 43 to the other input of the AND gate 42, which therefore provides an output on line 44 only when two logic 1 levels are simultaneously present at its input. The delay 43 provides a delay of exactly equal to one pulse repetition interval of the radar. If a genuine target is present at a particular range, one would expect to receive an echo from it on several consecutive radar pulse intervals as the radar beam sweeps across it. Thus AND gate 42 provides an output only if a corresponding signal at the same range is detected on two consecutive pulse repetition sequences. This has the effect of removing noise signals of very short duration. The signals on line 44 (which signal consists of a sequence of logic 1 levels to indicate the presence of a target, and logic 0 levels which indicate the absence of a target) is passed via a further delay 45 to another thirty-one stage shift register 46. The shift register 46 contains the same number of stages as shift register 34, but in this case each stage contains only a single digital bit, i.e. a logic 1 level or a logic 0 level. Each stage of the shift register 46 is coupled to one input of an OR gate 47, the other input of which is coupled to a respective line 36. It is important that each OR gate 47 receives signals relating to the same range at any particular instant, and the purpose of the delay line 45 is to ensure that the stream of digital bits are fed to the serial shift register 46 in synchronism with those fed to the shift register 34, but delayed by exactly two pulse repetition intervals. Thus the actual delay provided by delay line 45 is equal to one pulse repetition interval

less the time $\Delta$ required for the logic circuitry to operate. The signal provided over line 36 is termed the X signal and that provided directly by the shift register 46 is termed the Y signal and in each case a subscript is added to indicate the identity of the stage of the shift register. Each OR gate 47 is coupled to a further summation device 48, which provides an output on highway 49 which is representative of the number of logic 1 levels fed to it at any particular instant. The value of the signal on highway 49 is compared by a comparator 50 with a high threshold signal applied over highway 51. Typically, the value of the high threshold signal is twenty-seven which is one less than the number of reference cells in shift register 34.

At any one instant the shift registers 34 will contain amplitude samples which in general have different values. It is assumed for the moment that the test cell 16 contains the largest amplitude which is present in the shift register 34 and this means that it has the highest rank. Consequently, when this signal is compared with the amplitudes of the signals stored in the reference cells 1 to 14 and 18 to 31 by the comparators 35, the outputs of all comparators is a logic 1 level. When these logic 1 levels are summed in the summation device 37, an output is provided on line 38, which is representative of amplitude level twenty-eight. If the threshold level 40 with which it is compared corresponds to a level of twenty-four the comparator 39 provides a rank signal output on line 41 since the summed signal clearly exceeds the threshold value. If test cell 16 of shift register 34 also contains the highest amplitude level during the next following pulse repetition interval, a further rank signal will also be obtained. These two rank signals are applied to the AND gate 42, which produces a logic 1 level output. The rank signal on line 44 is delayed by the delay device 45 by the extent necessary to enable the shift register 46 to be synchronised with the shift register 34 as previously mentioned. During the next following (third) pulse repetition interval an amplitude sample corresponding to the same range is present in test cell 16 of register 34 and the rank signal derived from the two previous pulse repetition intervals is present in test cell 16 of shift register 46. Since every comparator 35 provides a logic 1 level output X signal, which are applied to the summation device 48 via OR gates 47, the output of the summation device 48 represents a level of twenty-eight units. Under this circumstance, the nature of the Y inputs to the OR gates 47 is irrelevant. Even if the threshold value applied to line 51 has a value of twenty-seven, a positive rank signal output is obtained from the comparator 50.

On the other hand, if the test cell 16 of shift register 34 contains a relatively low amplitude signal, which produces a rank value which does not exceed the low threshold value present on line 40, no rank signal is produced by the comparator 39. This means, in practice, that a logic 0 level is applied to AND gate 42. Consequently, on the third pulse repetition interval the test cell 16 of shift register 46 contains a logic 0 level. As the amplitude of the sample present in test cell 16 of shift register 34 has a relatively low rank, the values of the X signals applied to OR gates 47 will contain a relatively large number of logic 0 levels. Additionally, since the number of logic 1 levels present in the shift register 46 at any one time cannot exceed four (this is the number of reference cells (28) less the threshold (24) set for comparator 39) the number of logic 1 levels fed by the OR gates 47 to the summation device 48 will not exceed the high threshold level of twenty-seven units set for comparator 50. Providing that the pattern of targets and noise does not change significantly during the three pulse repetition intervals, both X and Y signals from a particular OR gate 47 should be the same as each other, i.e. both logic 1 levels or both logic 0 levels.

The third case represents the circumstances under which the present invention provides its particularly advantageous mode of operation — that is to say which enables a high ranking amplitude sample (which is nevertheless not of the highest rank) to be detected without adversely increasing the extent to which the detector responds to noise signals. It is this aspect which permits the constant false alarm rate of the detector to be maintained at an acceptably low level. Assuming that the signal in test cell 16 of the shift register 46 is a logic 1 level which represents a rank signal corresponding to the amplitude sample having say a third highest rank, there will be only three remaining logic 1 levels in the reference cells 1 to 14 and 18 to 31 of shift register 46 and these when summed will clearly not be sufficient to exceed the high threshold of twenty-seven units present on lead 51.

However, whenever the Y signal in a reference cell of register 46 is a logic 0 level, it means that the amplitude of the signal sample which was present in test cell 16 of register 34, at a time three pulse repetition periods previously, was such as to produce an X signal having a logic 1 level. This is because the presence of a Y signal having a logic 0 level means that the amplitude of the sample in the corresponding reference cell of register 34 was relatively low and resulted in a rank below the threshold value. Since the test cell 16 of shift register 46 is assumed to represent the signal having the third highest rank, in the example currently under consideration, output of most of the comparators 35 is a logic 1 level, as the amplitude of the sample in the test cell 16 of register 34 must be greater than that of the samples in the corresponding reference cell. Thus the X signal is a logic 1 level for nearly every OR gate 47 for which the Y signal is a logic 0 level. Whenever any particular X signal is at logic 0, the amplitude of the signal in the corresponding reference cell of register 34 is higher than that of the test cell. If this was also true, three pulse repetition intervals earlier, the signal in the corresponding reference cell of register 46 must be at logic 1, since it represents a higher ranking signal than that in the test cell, and in this example the test cell is the third highest ranking signal, and thus above the first threshold level. Thus, those reference cells for which the X input to a respective OR gate 47 is a logic 0 must, if they contain information corresponding to a signal as opposed to noise, contain a Y signal at a logic 1 level. This means that the summation signal produced on line 49 exceeds the threshold level of twenty-eight units on line 51. Therefore a rank signal is provided at the output of the comparator 50.

It will thus be appreciated that the detector enables weak target signals to be accepted even if a stronger target signal is also present, but without increasing the response of the detector to unwanted noise signals.

## Claims

1. A signal rank detector for use with a pulsed radar system, including a first stage (34, 35, 37) which receives a sequence of amplitude samples and which is arranged to examine each received sample and to provide a rank signal if the examined sample has a rank which exceeds a first rank threshold value; and a second stage (46, 47, 48) which is coupled to said first stage so as to receive all of said rank signals, and which utilises a particular rank signal only if that rank signal is present for at least two consecutive pulse repetition intervals, said second stage providing an output rank signal only if the examined sample has a rank value which exceeds a second rank threshold value which is greater than said first rank threshold value.

2. A detector as claimed in claim 1 and wherein the first stage is arranged to compare the amplitude of a selected sample with each of a number of preceding and following reference samples of the sequence of amplitude samples so as to provide a comparison signal for each reference sample if the selected sample is of greater amplitude than the reference sample with which it is compared.

3. A detector as claimed in claim 2 and wherein the second stage receives all of said rank signals together with the corresponding comparison signals.

4. A detector as claimed in claim 3 and wherein the rank of the selected sample as determined by the number of comparison signals is modified by the presence of the said rank signals.

5. A detector as claimed in claim 4 and wherein the comparison signals obtained during a particular pulse repetition interval are utilised by the second stage in conjunction with rank signals derived from the preceding two-pulse repetition intervals.

## Patentansprüche

1. Signalrangdetektor zur Anwendung bei einem gepulsten Radarsystem, mit einer ersten Stufe (34, 35, 37), die eine Reihe von Amplitudenproben empfängt und zum Absuchen jeder empfangenen Probe und zum Vorsehen eines Rangsignals eingerichtet ist, falls die abgesuchte Probe einen Rang aufweist, welcher einen ersten Rang-Schwellenwert übersteigt; und eine zweite Stufe (46, 47, 48), die derart an die erste Stufe angekoppelt ist, daß alle der besagten Rangsignale empfangen werden und ein bestimmtes Rangsignal nur dann verwendet, falls dieses Rangsignal über mindestens zwei aufeinanderfolgende Impuls-Wiederholungsintervalle ansteht, wobei die besagte zweite Stufe ein Ausgangs-Rangsignal nur dann liefert, falls die abgesuchte Probe einen Rangwert aufweist, der einen zweiten Rang-Schwellenwert übersteigt, der größer als der besagte erste Rang-Schwellenwert ist.

2. Detektor nach Anspruch 1, wobei die erste Stufe zum Vergleich der Amplitude einer ausgewählten Probe mit jeder einer Anzahl von vorhergehenden und nachfolgenden Bezugsproben der Folge von Amplitudenproben eingerichtet ist, um für jede Bezugsprobe ein Vergleichssignal zu erstellen, falls die gewählte Probe eine größere Amplitude als die der Bezugsprobe aufweist, mit der sie verglichen wird.

3. Detektor nach Anspruch 2, bei welchem die zweite Stufe alle der besagten Rangsignale sowie die entsprechenden Vergleichssignale empfängt.

4. Detektor nach Anspruch 3, bei dem der Rang der entsprechend der Anzahl von Vergleichssignalen gewählten Probe durch die Anwesenheit der besagten Rangsignale multipliziert wird.

5. Detektor nach Anspruch 4, bei dem die während eines bestimmten Impuls-Wiederholungsintervalls erhaltenen Vergleichssignale von der zweiten Stufe im Zusammenhang mit Rangsignalen genutzt werden, die von den vorhergehenden Zwei-Impuls-Wiederholungsintervallen abgeleitet wurden.

## Revendications

1. Un détecteur de rang de signaux à utiliser avec un système radar à impulsions, comprenant un premier étage (34, 35, 37) qui reçoit une séquence d'échantillons d'amplitude et qui est conçu pour examiner chaque échantillon reçu et pour fournir un signal de rang si l'échantillon examiné a un rang qui dépasse une première valeur de seuil de rang; et un deuxième étage (46, 47, 48) qui est couplé audit premier étage afin de recevoir tous lesdits signaux de rang et qui utilise un signal de rang particulier uniquement si ce signal de rang est présent pendant au moins deux intervalles de répétition d'impulsions consécutifs, ledit deuxième étage fournissant un signal de rang de sortie uniquement si l'échantillon examiné a une valeur de rang qui dépasse une deuxième valeur de seuil de rang supérieure à ladite première valeur de seuil de rang.

2. Un détecteur comme décrit à la revendication 1 et où le premier étage est conçu pour comparer l'amplitude d'un échantillon sélectionné à chacun des échantillons de référence précédents et suivants de la séquence d'échantillons d'amplitude de façon à fournir un signal de comparaison pour chaque échantillon de référence si l'amplitude de l'échantillon sélectionné est supérieure à celle de l'échantillon de référence avec lequel il est comparé.

3. Un détecteur comme décrit à la revendication 2 et où le deuxième étage reçoit tous lesdits signaux de rang avec les signaux de comparaison correspondants.

4. Un détecteur comme décrit à la revendication 3 et où le range de l'échantillon sélectionné comme déterminé par le nombre de signaux de comparaison est modifié par la présence desdits signaux de rang.

5. Un détecteur comme décrit à la revendication 4 et où les signaux de comparaison obtenus pendant un intervalle de répétition d'impulsions particulier sont utilisés par le deuxième étage conjointement avec des signaux de rang dérivés des deux intervalles de répétition d'impulsions précédents.

Fig.1.

FIG. 2.